Europäisches Patentamt

European Patent Office

Office européen des brevets

(11) Veröffentlichungsnummer: **0 240 577**

**A1**

## (12) EUROPÄISCHE PATENTANMELDUNG

(21) Anmeldenummer: 86104199.4

(22) Anmeldetag: 26.03.86

(51) Int. Cl.4: **H04L 11/16 , H04B 1/74**

(43) Veröffentlichungstag der Anmeldung:
14.10.87 Patentblatt 87/42

(84) Benannte Vertragsstaaten:
AT CH DE FR GB IT LI NL

(71) Anmelder: **LITEF Litton Techn. Werke der HELLIGE GmbH**
**Lörracher Strasse 18**
**D-7800 Freiburg/Br.(DE)**

(72) Erfinder: **Cordell, Steve**
**Dreisamstrasse 11**
**D-7836 Bahlingen(DE)**

(74) Vertreter: **Patentanwälte TER MEER - MÜLLER - STEINMEISTER**
**Mauerkircherstrasse 45**
**D-8000 München 80(DE)**

(54) Schnittstelleneinheit zwischen einem redundanten Dualbus und einer Datenverarbeitungseinheit.

(57) Zur Erhöhung der Funktionssicherheit und Flexibilität einer Schnittstelleneinheit (Interface) zwischen einem redundanten Dualbus (A1, B1 bzw. A2, B2) und einer Datenverarbeitungseinheit (CPU) und/oder Datenquellen mit Steuer- und Überwachungslogik und mehreren Codier-/Decodier-Einheiten (C/DA1, C/DB1 bzw. C/DA2, C/DB2) sowie mehreren auf die Leitungen des Busses geschalteten Transceivern (TA1, TB1 bzw. TA2, TB2) ist zwischen den Transceivern und den Codier-/Decodier-Einheiten ein Multiplexer (M) eingeschaltet, über den wahlweise jede der Codier-/Decodier-Einheiten auf jeden der Transceiver schaltbar ist. Ein Ausfall einzelner Baueinheiten der Schnittstelleneinheit ermöglicht so immer noch eine zuverlässige Kommunikation über sämtliche Leitungen des Bussystems.

FIG. 2

## Schnittstelleneinheit zwischen einem redundanten Dualbus und einer Datenverarbeitungseinheit

Die Erfindung betrifft eine Schnittstelleneinheit (Interface) zwischen einem redundanten Dualbus und einer Datenverarbeitungseinheit (Rechner) mit mindestens einer an die Datenverarbeitungseinheit angeschlossenen Steuerlogik (Controller), mehreren mit der Steuerlogik verbundenen Codier-/Decodier-Einheiten, deren Anzahl der zu bedienenden Leitungsanzahl des redundanten Dualbusses entspricht und mit einer der Leitungsanzahl entsprechenden Anzahl von Transceivern, die einerseits je mit einer Leitung des redundanten Dualbusses verbunden und andererseits auf eine der Codier-/Decodiereinheiten schaltbar sind.

Zur Erhöhung der Sicherheit und Zuverlässigkeit ist es in technischen Systemen allgemein bekannt, das Prinzip der sogenannten Redundanz einzusetzen. Im einfachsten Fall wird durch dual-redundante Auslegung beispielsweise von Schaltern, von Leitungsverbindungen und dergleichen, aber auch von sicherheitskritischen Recheneinheiten, Ventilen usw., eine beträchtliche Erhöhung der Langzeitzuverlässigkeit erreicht. In Avionik-Systemen beispielsweise ist es als Mindeststandard vorgeschrieben, das Bus-System zwischen einem zentralen Bordrechner und einzelnen peripheren Steuer-und Überwachungseinheiten (sogenannten Remote Terminals) dual-redundant auszulegen. Werden jedoch über die beiden Leitungen des dual-redundanten Busses unterschiedliche Funktionen übertragen, so kann beispielsweise ein Ausfall der Endstufen in der Bus-Steuerlogik (dem Bus-Controller) zu einem Totalausfall mindestens einzelner Teile des Bus-Systems führen.

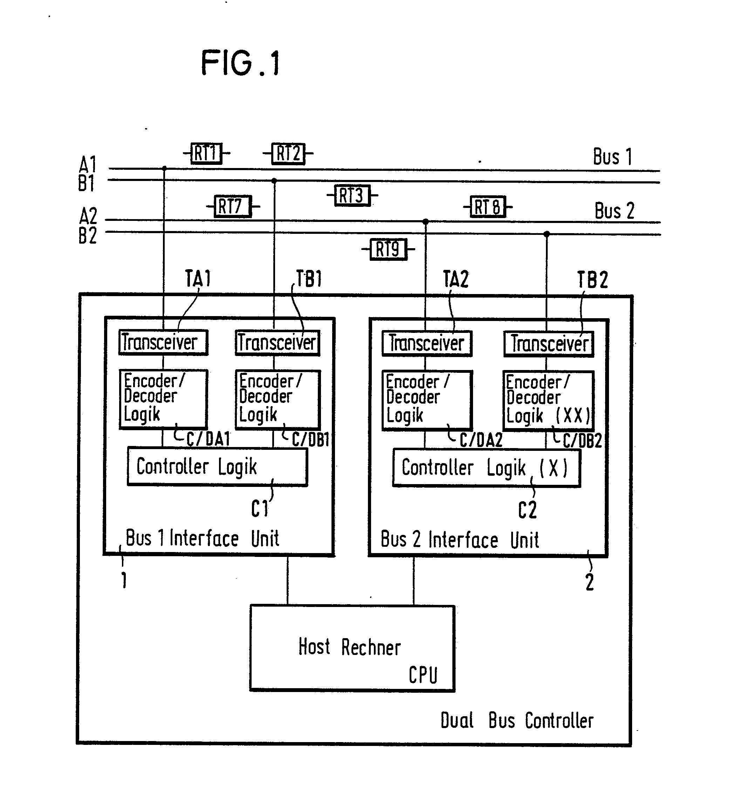

Um diesen katastrophalen Ausfall zu vermeiden und gleichzeitig die Kommunikationsbandbreite des Bus-Systems zu erhöhen, wird in der Regel in sicherheitskritischen Systemen ein doppeldual-redundanter Bus eingesetzt. Die Fig. 1 veranschaulicht ein herkömmliches redundantes Doppeldual-Bus-system mit zwei völlig getrennten Bus-Schnittstelleneinheiten 1 bzw. 2, die je eine mit einem Host-Rechner oder einem Zentralrechner CPU verbundene Steuerlogik (Controller-Logik) Cl bzw. C2, je zwei Codier-/Decodier-Einheiten C/DA1, C/DB1 bzw. C/DA2 und C/DB2 sowie je zwei Transceiver (Sende-Empfänger-Verstärkereinheiten)TA1, TB1 bzw. TA2, TB2 aufweisen, die jeweils mit einer Leitung A1, B1 des ersten Busses bzw. A2, B2 des zweiten Busses verbunden sind. Über die Leitungen der Busse erfolgt ein Informationsaustausch mit peripheren Endstelleneinheiten (Remote Terminals) RT1, RT2, ..., RT9.

Im Falle eines Fehlers in der gemeinsamen Bus-Steuerlogik jedoch kann der jeweils zugehörige Bus mindestens auf einer Leitung ausfallen, d. h., eine Kommunikation zwischen denBussen ist nicht mehr möglich, und die zugehörige Endstelleneinheit fällt als Gesprächspartner aus. Denkbar wäre hier die Verwendung einer zweiten Bus-Steuereinheit, die im Standby-Betrieb arbeitet. Dadurch würde das Ausfallrisiko erheblich reduziert werden; das System wird jedoch praktisch doppelt so teuer wie ein System mit einer einzelnen Bus-Steuereinheit.

Um die möglichen Fehlerarten zu verdeutlichen, seien zwei unterschiedliche Möglichkeiten betrachtet:

Tritt ein sogenannter Single-Point-Fehler beispielsweise in der Steuerlogik C2 auf (dort mit "X" markiert), so wird das gesamte Bus 2-System kommunikationsunfähig. Dies führt fast ausnahmslos zu einem "fatalen Fehler" in wesentlichen Teilen eines damit ausgerüsteten Avionik-Systems.

Eine zweite Fehlerart kann beispielsweise in einer weniger komplexen Einheit, etwa in dem Codierer/Decodierer C/DB1 (dort mit "XX" markiert), auftreten. In diesem Fall wäre die Endstelleneinheit RT9 nicht mehr in der Lage, über die Leitung B2 des Busses 2 zu kommunizieren; es würde also eine elektronische Umschaltung auf Leitung A2 des Busses 2 erfolgen. Damit wäre aber die Sicherheit ernsthaft gefährdet und alle auf Leitung B2 des Busses 2 angewiesenen Verbindungen würden ausfallen.

Der Erfindung liegt die Aufgabe zugrunde, Schnittstelleneinheiten für redundante Dual-Bussysteme so zu verbessern, daß der Aufwand eines Standby-Betriebs durch eine zweite Schnittstelleneinheit vermieden, andererseits eine wesentliche Erhöhung der Ausfallsicherheit gewährleistet werden kann.

Eine Schnittstelleneinheit der eingangs genannten Art ist erfindungsgemäß gekennzeichnet durch einen zwischen den Codier-/Decodier-Einheiten und den Transceivern eingeschalteten Multiplexer, über den jede Codier-/Decodier-Einheit automatisch auf jeden der Transceiver schaltbar bzw. umschaltbar ist.

Eine hohe zusätzliche Sicherheit kann gewährleistet werden durch einen zweiten, parallelgeschalteten Reservemultiplexer. Diese zusätzliche Funktionssicherheit wird mit kostenmäßig geringem Aufwand erreicht im Vergleich zu einer vollständigen Standby-Einheit der gesamten Schnittstelle.

Der wesentliche Vorteil der Erfindung besteht in einer hohen Flexibilität und Betriebszuverlässigkeit der Schnittstelleneinheit bei vergleichsweise geringen Kosten, Einsparung an Gewicht und Raumbedarf sowie vermindertem Stromverbrauch. Das Ausfallrisiko bezüglich des gesamten Busses ist sehr stark vermindert.

Ein Ausführungsbeispiel der Erfindung wird nachfolgend unter Bezug auf die Zeichnung erläutert. Es zeigt:

Fig. 1 den bereits erläuterten Aufbau einer Bus-Steuereinheit für einen redundanten Doppel-Dualbus mit zwei Schnittstelleneinheiten, und

Fig. 2 einen der Fig. 1 entsprechenden Schaltungsaufbau mit zusätzlicher erfindungsgemäßer Ergänzung eines Multiplexers.

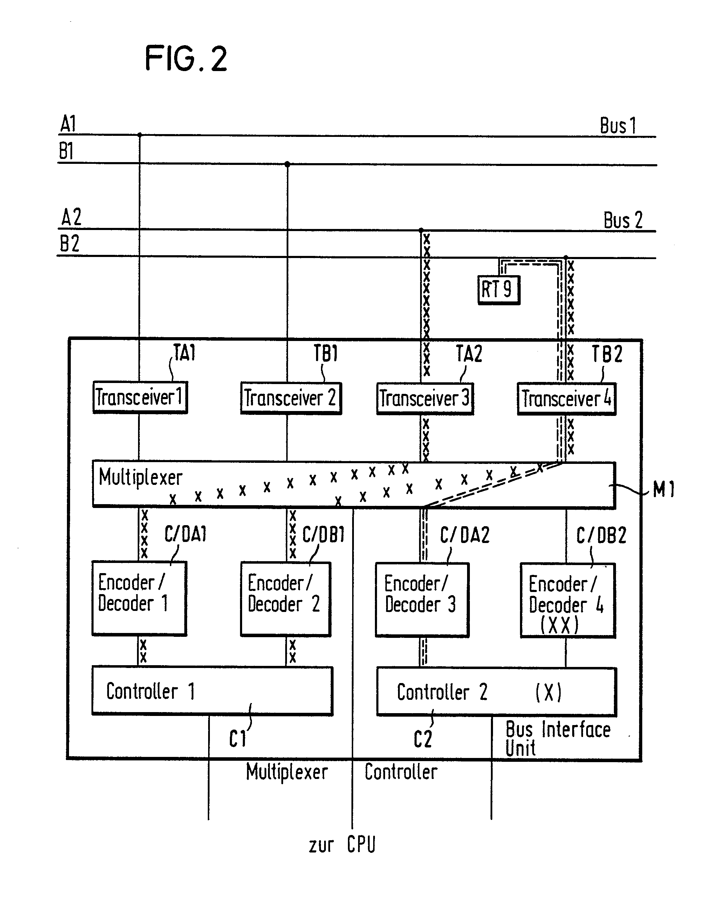

Wie die Schaltungsanordnung der Fig. 2 im Vergleich zu der der Fig. 1 erkennen läßt, liegt zwischen den Codier-/Decodier-Einheiten C/DA1, C/DB1 bzw. C/DA2 und C/DB2 ein Multiplexer M1, der durch ein externes, beispielsweise vom Rechner CPU oder vom Controller geliefertes Taktsignal getaktet wird. Über den Multiplexer M1 (Front-End-Multiplexer) kann jeder Aus-/Eingang der Codier-/Decodier-Einheiten auf jeden der Transceiver TA1, TB1 bzw. TA2, TB2 geschaltet werden und damit mit jeder Leitung A1, B1 bzw. A2, B2 von Bus 1 oder Bus 2 verbunden werden.

Die damit erreichte erheblich höhere Zuverlässigkeit und Flexibilität der gesamten Schnittstelleneinheit sei wieder unter Betrachtung der oben erläuterten Single-Point-Fehler verdeutlicht:

Die Endstelleneinheit RT9 soll über Leitung B2 von Bus 2 erreicht werden. Bei Ausfall der Steuereinheit C2 (wiederum markiert durch "X") wäre nach der bekannten Anordnung der gesamte Bus 2 funktionsuntüchtig. Über die Steuereinheit C1 ist jedoch nach wie vor eine Kommunikation über beide Leitungen A2, B2 des Busses 2 möglich. Die beiden möglichen Verbindungswege vom Rechner über die Steuereinheit C1, die Codier-/Decodier-Einheiten C/DA1 und C/DB1 zu den Transceivern TA2, TB2 und schließlich auf die Leitungen A2, B2 ist durch eine entsprechende Markierung "xxxx.." angegeben. Die Endstelleneinheit RT9 wird also nach wie vor über die Leitung B2 des Busses 2 erreicht, jetzt jedoch von der Steuereinheit C1 über die Codier-/Decodier-Einheit C/DB1 angesteuert.

Tritt ein Single-Point-Fehler dagegen (analog zum obigen Beispiel) in der Codier-/Decodier-Einheit C/DB2 auf (wiederum angedeutet durch "XX"), so ist jetzt eine Kommunikation der Endstelleneinheit RT9 nach wie vor über die Leitung B2 möglich, und zwar beispielsweise über die Steuereinheit C2, den Codierer-/Decodierer C/DA2 und den Transceiver TB2.

Es kann in einzelnen sicherheitskritischen Systemen erwünscht sein, nicht nur die Flexibilität und Sicherheit eines mehrfach redundanten Bus-Systems im Bereich einer zentralen Datenverarbeitungseinheit und/oder eines Haupt-Buscontrollers die Verwendung der erfindungsgemäßen Multiplex-Anordnung zu erhöhen. Eine wesentliche Erhöhung der Flexibilität und Verbesserung der Zuverlässigkeit ergibt sich insbesondere dann, wenn auch die Endstellen-Einheiten (Remote Terminals) mit einem Multiplexer bestückt und über eine entsprechende Anzahl von Transceivern auf mehere Leitungen des mehrfach redundanten Busses aufschaltbar sind. Bei Ausfall eines gesamten Busses (Kanäle A und B) kann dann die Endstellen-Einheit von sich aus auf den verbleibenden weiteren Bus umschalten. Dadurch kann die Verbindung zu allen übrigen Avionik-Systemen aufrechterhalten bleiben. Für den Fall, daß sowohl wenigstens eine der Endstellen-Einheiten zusätzlich mit einem Multiplexer und einer entsprechenden Anzahl von Transceivern ausgerüstet ist, kann von einer solchen EndstellenEinheit - gegebenenfalls nach einem Protokoll-Austausch -mit dem Haupt-Buscontroller wenigstens zeitweise die Steuer-und Überwachungsfunktion für den Gesamtbus übernommen werden.

Die erfindungsgemäße Schnitstelleneinheit weist zwar im Vergleich zur herkömmlichen Technik mindestens einen Logikbaustein mehr auf, was jedoch einen vergleichsweise geringen Zusatzaufwand darstellt. Die Zuverlässigkeit und Flexibilität des Geräts sind jedoch erheblich gesteigert. Werden nun beispielsweise zwei derart aufgebaute Bus-Steuereinheiten eingesetzt und das zweite Gerät im Standby-Betrieb gehalten, so wird ein außerordentlich hoher Zuverlässigkeitsgrad erreicht.

## Ansprüche

1. Schnittstelleneinheit zwischen einem redundanten Dualbus (A1, B1 bzw. A2, B2) und einer Datenverarbeitungseinheit (CPU) und/oder Datenquellen mit mindestens einer an die Datenverarbeitungseinheit bzw. die Datenquellen angeschlossenen Steuer-und Überwachungslogik (C1, C2), mehreren mit der Steuer-und Überwachungslogik verbundenen Codier-/Decodier-Einheiten (C/DA1, C/DB1 bzw. C/DA2, C/DB2), deren Anzahl der zu bedienenden Leitungsanzahl des redundanten Dualbusses entspricht und mit einer der Leitungsanzahl entsprechenden Anzahl von Transceivern (TA1, TB1 bzw. TA2, TB2), die einerseits je mit einer Leitung (A1, B1 bzw. A2, B2) des redundanten Dualbusses verbunden und andererseits auf eine der Codier-/Decodier-Einheiten schaltbar sind, **gekennzeichnet durch** einen zwischen den Codier-/Decodier-Einheiten (C/DA1, C/DB1 bzw. C/DA2, C/DB2) und den Transceivern (TA1, TB1 bzw. TA2, TB2) eingeschalteten Multiplexer (M1) ,über den wahlweise jede Codier-/Decodier-Einheit auf jeden der Transceiver - schaltbar ist.

2. Schnittstelleneinheit nach Anspruch 1, **gekennzeichnet durch** einen zum Multiplexer (M1) parallelgeschalteten redundanten Reservemultiplexer.

0 240 577

# FIG.1

0 240 577

# FIG. 2

A1 ─────────────────────────── Bus 1
B1 ───────────────────────────

A2 ─────────────────────────── Bus 2
B2 ───────────────────────────

RT 9

| TA1 | TB1 | TA2 | TB2 |
| Transceiver 1 | Transceiver 2 | Transceiver 3 | Transceiver 4 |

Multiplexer    x x x x x x x x x x   x x x x    ──── M1

C/DA1  C/DB1  C/DA2  C/DB2

| Encoder / Decoder 1 | Encoder / Decoder 2 | Encoder / Decoder 3 | Encoder / Decoder 4 (XX) |

| Controller 1 | Controller 2 (X) |

C1    C2    Bus Interface Unit

Multiplexer    Controller

zur CPU

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | ELECTRICAL DESIGN NEWS, Band 17, Nr. 7, 1. April 1972, Seiten 18-23; J. OHLHABER: "Multiplexing doesn't have to be limited to communications applications" * Seite 22, rechte Spalte, Zeile 15 - Seite 23, linke Spalte, Zeile 19; Figur 6 * | 1,2 | H 04 L 11/16 H 04 B 1/74 |
| | --- | | |
| Y | IEEE TRANSACTIONS ON POWER APPARATUS AND SYSTEMS, Band PAS-102, Nr. 1, Januar 1983, Seiten 127-133, IEEE, New York, US; D. DAMSKER: "Totally distributed, redundantly structured hardware and software local computer control network" * Figuren 2,3 * | 1 | |
| | --- | | RECHERCHIERTE SACHGEBIETE (Int. Cl.4) |
| Y | EP-A-0 147 046 (TANDEM COMPUTERS INC.) * Seite 9, Zeilen 2-11; Seite 9, Zeilen 22-26; Figur 1 * | 2 | H 04 B H 04 L G 06 F |
| | --- | | |
| A | EP-A-0 081 238 (HITACHI) * Seite 5, Zeile 10 - Seite 6, Zeile 17; Figur 1 * | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 25-11-1986 | MIKKELSEN C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82